# EUROPÄISCHE PATENTANMELDUNG

(11) **EP 3 220 000 A1**
(43) Veröffentlichungstag der Anmeldung: **20.09.2017**
(21) Anmeldenummer: 17160975.3
(22) Anmeldetag: 15.03.2017
(51) Int. Cl.: F16D 69/02, F16D 13/64

(54) **VERFAHREN ZUM HERSTELLEN EINER REIBSCHICHT**

(30) Priorität: 16.03.2016 DE 102016204354
(71) Anmelder: Schaeffler Technologies AG & Co. KG, 91074 Herzogenaurach (DE)
(72) Erfinder: Meißner, Daniel, 53783 Eitorf (DE)

(57) **Zusammenfassung**

Die Erfindung betrifft ein Verfahren zum Herstellen einer Reibschicht, insbesondere für einen trocken oder feucht laufenden Kupplungsreibbelag, auf einem Trägerelement.

Die Erfindung zeichnet sich dadurch aus, dass die Reibschicht aus einem Pulverlack gebildet wird, dem Schleifstaub beigemischt ist, der aus einer herkömmlichen Reibbelagfertigung stammt.

## Beschreibung

Die Erfindung betrifft ein Verfahren zum Herstellen einer Reibschicht, insbesondere für einen trocken oder feucht laufenden Kupplungsreibbelag, auf einem Trägerelement. Die Erfindung betrifft auch ein Trägerelement mit einer Reibschicht. Die Erfindung betrifft des Weiteren eine trocken oder feucht laufende Reiblamelle einer Lamellenkupplung mit mindestens einem derartigen Trägerelement.

Aus der deutschen Offenlegungsschrift DE 10 2012 014 811 A1 ist ein Reibteil für eine reibschlüssig arbeitende Einrichtung mit einer ringförmigen Reibfläche bekannt, die einen Innenrand und einen Außenrand aufweist. Aus der deutschen Offenlegungsschrift DE 10 2009 013 406 A1 ist ein Verfahren zur Herstellung eines Reibbelags bekannt, der einer Heißpresse entnommen und im noch heißen Zustand in eine Kühlpresse eingeführt wird. Aus der deutschen Offenlegungsschrift DE 10 2011 086 521 A1 sind ein Reibkörper, insbesondere eine Nasslauf-Reiblamelle, und ein Verfahren zur Herstellung des Reibkörpers, insbesondere der Nasslauf-Reiblamelle, bekannt, wobei der Reibkörper einen Belagträger aufweist, der wiederum einen Reibbereich und einen Verbindungsbereich aufweist, wobei der Reibkörper mindestens zwei Papierrohlinge aufweist. Aus der deutschen Patentschrift DE 10 2005 029 036 B4 ist ein Verfahren zur Herstellung eines Bremsbelags bekannt, wobei eine Reibmasse auf einer Trägerplatte gepresst, anschließend die Reibmasse auf ihrer Reibseite durch Fräsen bearbeitet wird, wobei nach dem Fräsen und vor einem Härten ein Lack, vorzugsweise ein Pulverlack, auf die Trägerseite des Bremsbelages aufgebracht wird, wobei der Lack beim Härten des Bremsbelages ausgehärtet wird. Aus der deutschen Offenlegungsschrift DE 10 2014 113 434 A1 ist ein Bauelement mit Brandschutzeigenschaften mit einem Grundkörper bekannt, der eine Beschichtung aufweist, wobei die Beschichtung einen Pulverlack enthält. Aus der deutschen Gebrauchsmusterschrift DE 20 2013 004 788 U1 sind geräuschdämpfende Maßnahmen auf Bremsbelägen bekannt, die in Kraftfahrzeugen und Anhängern jeglicher Art eingesetzt werden, auf Basis von beschichteten Blechen aus geeigneten Trägermaterialien, wobei neue druckstabile Materialien zum Einsatz kommen, die bis fünfhundert Grad Celsius temperaturstabil sind.

Aufgabe der Erfindung ist es, die Effizienz beim Herstellen von Reibschichten, insbesondere für trocken oder feucht laufende Kupplungsreibbeläge, auf Trägerelementen zu erhöhen.

Die Aufgabe ist bei einem Verfahren zum Herstellen einer Reibschicht, insbesondere für einen trocken oder feucht laufenden Kupplungsreibbelag, auf einem Trägerelement, dadurch gelöst, dass die Reibschicht aus einem Pulverlack gebildet wird, dem Schleifstaub beigemischt ist, der aus einer herkömmlichen Reibbelagfertigung stammt. Trockenlaufend bedeutet, dass der Kupplungsreibbelag im Betrieb nicht mit einem Kühl- und/oder Schmiermedium, wie Öl, in Kontakt kommt. Im Gegensatz dazu wird bei nasslaufenden Anwendungen dem Kupplungsreibbelag gezielt ein Kühl- und/oder Schmiermedium, wie Öl, zugeführt. Das Öl wird bei nasslaufenden Anwendungen zum Beispiel mit Hilfe geeigneter Fördereinrichtungen, wie Pumpen, aktiv zu dem Kupplungsreibbelag gefördert beziehungsweise umgepumpt. Bei feuchtlaufenden Kupplungsreibbelägen kommt der Kupplungsreibbelag mit einem Kühl- und/oder Schmiermedium, wie Öl, in Kontakt. Allerdings wird das Öl nicht aktiv zu dem Kupplungsreibbelag gefördert. Bei feuchtlaufenden Anwendungen planscht der Kupplungsbelag zum Beispiel ein einem Getriebeölsumpf. Bei den feuchtlaufenden Anwendungen, wie sie zum Beispiel bei Motorrädern vorkommen, kommt es zu einer Mischreibung im Betrieb des Kuppungsreibbelags. Im Rahmen der vorliegenden Erfindung wurden Versuche und Untersuchungen durchgeführt, wie aus einem Pulverlack effizient Reibschichten auf einem Trägerelement hergestellt werden können. Dabei wurden zunächst herkömmliche Pulverlacke verwendet, um die Reibschicht zu bilden. Überraschenderweise wurde bei Versuchen mit dem Pulverlack festgestellt, dass durch eine Beimischung von Schleifstaub aus der herkömmlichen Reibbelagfertigung in der Reibschicht vergleichbare tribologische Eigenschaften wie bei konventionellen trocken oder feucht laufenden Kupplungsreibbelägen erreicht werden können. Die Verwendung des Schleifstaubs aus der herkömmlichen Reibbelagfertigung in dem Pulverlack ist somit ein neuer wertschöpfender Schritt bei der Herstellung der Reibschicht auf dem Trägerelement. Darüber hinaus kann durch die Verwendung des Schleifstaubs aus der herkömmlichen Reibbelagfertigung eine ansonsten gegebenenfalls erforderliche Schleifstaubverbrennung entfallen.

Der herkömmliche trocken oder feucht laufende Reibbelag wird zum Beispiel aus einem Rohling gebildet, der in einer Heißpresse mit Druck beaufschlagt wird. Der vorzugsweise durch Wickeln hergestellte Rohling ist zum Beispiel aus einem Harz gebildet, in das Faser- und/oder Füllstoffkomponenten eingebettet werden. Bei dem Harz handelt es sich zum Beispiel um ein Phenolharz/Melaminharz. Der Rohling enthält vorzugsweise mindestens eine, mehrere oder jede der folgenden Komponenten: Kautschuk, Glasfasern, organische Fasern, Kupfer. Anstelle von Kupfer kann gegebenenfalls auch Messing verwendet werden.

Ein bevorzugtes Ausführungsbeispiel des Verfahrens ist dadurch gekennzeichnet, dass einer Pulverlackbasismischung Schleifstaub aus der herkömmlichen Reibbelagfertigung beigemischt wird. Der Schleifstaub aus der herkömmlichen Fertigung von konventionellen Kupplungsbelägen wird bei der Herstellung einer sprühfertigen Pulverlackmischung einfach beigemischt. Mit dieser Pulverlackmischung können dann Reibschichten hergestellt werden, die ähnliche tribologische Eigenschaften wie Reibschichten aus herkömmlichen Kupplungsbelägen aufweisen. Somit ist das Trägerelement mit der Reibschicht aus dem Pulverlack insbesondere geeignet, um in einer Kupplungsanwendung ein Drehmoment von einer Antriebsmaschine auf ein Getriebe zu übertragen.

Ein weiteres bevorzugtes Ausführungsbeispiel des Verfahrens ist dadurch gekennzeichnet, dass der Schleifstaub aus der herkömmlichen Reibbelagfertigung als Füllstoff in der Pulverlackmischung verwendet wird. Der Schleifstaub aus der herkömmlichen Reibbelagfertigung kann alleine als Füllstoff in der sprühfertigen Pulverlackmischung verwendet werden. Der Schleifstaub aus der herkömmlichen Reibbelagfertigung kann aber auch mit anderen Füllstoffen in der Pulverlackmischung kombiniert werden.

Ein weiteres bevorzugtes Ausführungsbeispiel des Verfahrens ist dadurch gekennzeichnet, dass die Pulverlackmischung zur Herstellung der Reibschicht mindestens ein Bindemittel, mindestens einen Vernetzer und als Füllstoff Schleifstaub aus der herkömmlichen Reibbelagfertigung enthält. Bei den im Rahmen der vorliegenden Erfindung durchgeführten Versuchen und Untersuchungen wurde festgestellt, dass die tribologischen Eigenschaften der Reibschicht durch den Pulverlack mit dem Schleifstaub aus der herkömmlichen Reibbelagfertigung als Füllstoff deutlich verbessert werden können. Gegebenenfalls können dem Pulverlack noch weitere Füllstoffe beigemischt werden. Aber die Beigabe des Schleifstaubs aus der herkömmlichen Reibbelagfertigung hat zu einer signifikanten Verbesserung der tribologischen Eigenschaften der Reibschicht aus dem Pulverlack geführt.

Ein weiteres bevorzugtes Ausführungsbeispiel des Verfahrens ist dadurch gekennzeichnet, dass Schleifstaub, der beim Schleifen von herkömmlichen Reibbelägen anfällt, gesammelt und dem Pulverlack beigemischt wird. Herkömmliche Pulverlacke sind zum Beispiel auf Basis von Polyesterharzen oder Epoxidharzen aufgebaut. In herkömmlichen Pulverlacken werden als Füllstoffe zum Beispiel Ruße, Pigmente oder mineralische Füllstoffe, wie zum Beispiel Schwerspat, verwendet. Die Herstellung von Pulverlack erfolgt üblicherweise in einem Extruder. Darin wird das verwendete Harz über eine erste Glastemperatur erhitzt, zum Beispiel auf Temperaturen zwischen siebzig und neunzig Grad Celsius. Im Extruder werden Zuschlagstoffe homogen im Harz verteilt. Dazu ist eine möglichst feine Struktur der Zuschlagstoffe erforderlich. Die erkaltete Masse wird anschließend erneut fein vermahlen und steht für die Pulverlackierung zur Verfügung. In der konventionellen Herstellung von Kupplungsbelägen werden die Beläge mindestens einmal, meist sogar öfter geschliffen, um ein gewünschtes Endmaß und geforderte Dickentoleranzen zu erreichen. Dabei gehen zehn bis dreißig Prozent des Belagmaterials als Schleifstaub oder Reibstaub verloren. Dieser Schleifstaub oder Reibstaub wird gemäß einem Aspekt der vorliegenden Erfindung verwendet, um die Eigenschaften der aus dem Pulverlack gebildeten Reibschicht zu verbessern.

Ein weiteres bevorzugtes Ausführungsbeispiel des Verfahrens ist dadurch gekennzeichnet, dass der Pulverlack mit dem Schleifstaub aus der herkömmlichen Reibbelagfertigung in Form einer sprühfertigen Pulverlackmischung auf das Trägerelement abgeschieden wird. Das Auftragen beziehungsweise Abscheiden der sprühfertigen Pulverlackmischung erfolgt vorzugsweise in einer Beschichtungskabine. Das Trägerelement wird vorteilhaft vor dem Beschichten mit dem Pulverlack erwärmt.

Dadurch können die Eigenschaften der aus dem Pulverlack mit dem Schleifstaub aus der herkömmlichen Reibbelagfertigung gebildeten Reibschicht nochmals verbessert werden.

Ein weiteres bevorzugtes Ausführungsbeispiel des Verfahrens ist dadurch gekennzeichnet, dass das Abscheiden des Pulverlacks mit dem Schleifstaub aus der herkömmlichen Reibbelagfertigung auf das vorzugsweise erhitzte Trägerelement fortgesetzt wird, bis eine gewünschte Reibschichtdicke erreicht ist. Dabei wird der Schleifstaub aus der herkömmlichen Reibbelagfertigung zusammen mit den Pulverlackpartikeln der Pulverlackbasismischung aufgeschmolzen und in die Pulverlackschicht eingebunden. Beim anschließenden Aushärten werden die Komponenten des Schleifstaubs aus der herkömmlichen Reibbelagfertigung mit den Pulverlackkkomponenten der Pulverlackbasismischung vernetzt, um eine homogene Reibschicht zu bilden.

Ein weiteres bevorzugtes Ausführungsbeispiel des Verfahrens ist dadurch gekennzeichnet, dass die ausgehärtete Reibschicht mit dem Schleifstaub aus der herkömmlichen Reibbelagfertigung eine Dicke von 0,2 bis 1,5 Millimeter, insbesondere von 0,5 bis 1,0 Millimeter, aufweist. Diese Reibschichtdicke hat sich im Hinblick auf die trocken laufende Anwendung im Automobilbereich oder im Hinblick auf feucht laufende Anwendungen bei Motorrädern als besonders vorteilhaft erwiesen. Das Trägerelement ist vorteilhaft nicht nur auf einer Seite, sondern auf zwei voneinander abgewandten Seiten mit einer ausgehärteten Reibschicht aus darauf abgeschiedenen Pulverlackpartikeln mit dem Schleifstaub aus der herkömmlichen Reibbelagfertigung versehen.

Die Erfindung betrifft des Weiteren ein Trägerelement mit einer Reibschicht, die insbesondere gemäß einem vorab beschriebenen Verfahren, aus einem Pulverlack gebildet ist, dem Schleifstaub beigemischt ist, der aus einer herkömmlichen Reibbelagfertigung stammt.

Die Erfindung betrifft des Weiteren eine trocken oder feucht laufende Reiblamelle einer Lamellenkupplung mit mindestens einem vorab beschriebenen Trägerelement. Die Lamellenkupplung umfasst vorzugsweise mehrere trocken oder feucht laufende Reiblamellen, die reibschlüssig mit weiteren Lamellen, insbesondere Stahllamellen, in Eingriff gebracht werden können, um ein Drehmoment zu übertragen.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
Figur 1 eine perspektivische Darstellung eines Trägerelements mit einer Reibschicht, die aus einem Pulverlack gebildet ist, auf einer Seite;
Figur 2 das gleiche Trägerelement wie in Figur 1 mit Reibschichten, die aus Pulverlack gebildet sind, auf zwei voneinander abgewandten Seiten;
Figur 3 eine perspektivische Darstellung eines Trägerelements in Gestalt eines Hohlzylinders mit einer Reibschicht aus einem Pulverlack und
Figur 4 eine vereinfachte Darstellung eines Ablaufplans eines Verfahrens zur Herstellung von Trägerelementen mit mindestens einer Reibschicht aus einem Pulverlack.

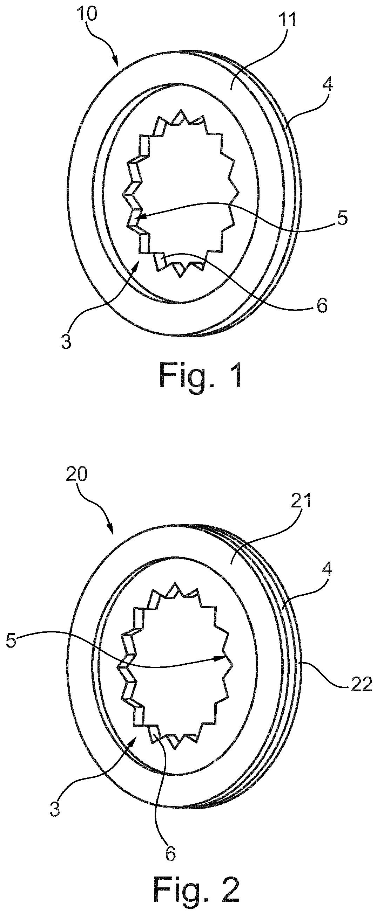

In den Figuren 1 und 2 ist ein Trägerelement 3 einer trocken laufenden Reiblamelle 10; 20 gemäß zwei verschiedenen Ausführungsbeispielen dargestellt. Das Trägerelement 3 ist als Blechteil in Gestalt einer Kreisringscheibe 4 ausgeführt.

Das Trägerelement kann auch als Druckgussteil ausgeführt sein. Kostengünstig herstellbare Trägerelemente sind zum Beispiel als Aluminiumdruckgussteile ausgeführt.

Die Kreisringscheibe 4 weist radial innen einen Mitnehmerbereich 5 auf, der zur Darstellung einer drehfesten Verbindung mit einem (nicht dargestellten) Lamellenträger einer trocken laufenden Lamellenkupplung dient. Der Mitnehmerbereich 5 ist als Innenverzahnung 6 ausgeführt. Anders als dargestellt, kann der Mitnehmerbereich auch radial außen in Gestalt einer Außenverzahnung angeordnet sein.

Die in Figur 1 dargestellte Reiblamelle 10 ist auf einer Seite mit einer Reibschicht 11 versehen, die aus einem Pulverlack gebildet ist. Die Reibschicht 11 aus dem Pulverlack hat die Gestalt einer Kreisringscheibe, deren Außendurchmesser gleich dem Außendurchmesser der Kreisringscheibe 4 des Trägerelements 3 ist. Ein Innendurchmesser der Reibschicht 11 ist größer als ein Durchmesser der Innenverzahnung 6 im Mitnehmerbereich 5 des Trägerelements 3.

Wenn der Mitnehmerbereich eine Verzahnung umfasst, kommt es zum Beispiel darauf an, dass Kanten der Verzahnung frei von der Reibschicht sind, um die Darstellung einer formschlüssigen Verbindung zu ermöglichen. Ansonsten dürfen Flächen in dem Mitnehmerbereich prinzipiell auch mit der Reibschicht versehen sein.

Bei der in Figur 2 dargestellten Reiblamelle 20 sind auf zwei voneinander abgewandten Seiten des Trägerelements 3 Reibschichten 21, 22 aus einem Pulverlack aufgebracht. Die Reibschichten 21, 22 haben den gleichen Innendurchmesser und den gleichen Außendurchmesser sowie die gleiche Dicke wie die Reibschicht 11 der in Figur 1 dargestellten Reiblamelle 10.

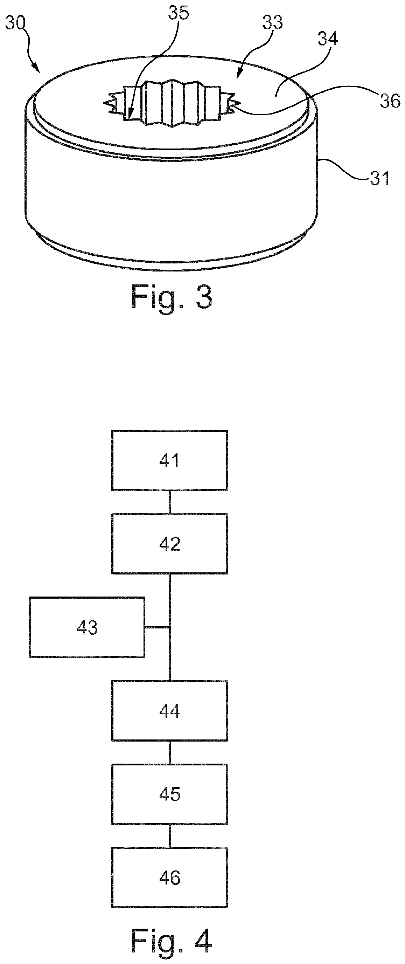

In Figur 3 ist eine Reiblamelle 30 perspektivisch dargestellt. Die Reiblamelle 30 ist mit einer Reibschicht 31 aus einem Pulverlack versehen. Die Reibschicht 31 ist auf einem Trägerelement 33 angeordnet, das die Gestalt eines geraden Hohlzylinders 34 aufweist.

Der Hohlzylinder 34 weist radial innen einen Mitnehmerbereich 35 mit einer Innenverzahnung 36 auf. Radial außen weist der Hohlzylinder 34 eine Mantelfläche auf, auf welche die Reibschicht 31 aus dem Pulverlack aufgebracht ist.

Die in den Figuren 1 bis 3 dargestellten Reiblamellen 10; 20; 30 sind mit relativ dünnen Reibschichten 11; 21, 22; 31 aus Pulverlack versehen. Bei der in Figur 2 dargestellten Reiblamelle 20 werden auf beiden Seiten des Trägerelements 3 Reibschichten 21, 22 aus Pulverlack aufgebracht. Bei den in den Figuren 1 und 2 dargestellten Reiblamellen10; 20 steht das Trägerelement 3 an seinem Innendurchmesser über die Reibschicht 11; 21, 22 hinaus.

Durch die Bildung der Reibschichten 11; 21, 22; 31 aus Pulverlack können die Reiblamellen 10; 20; 30 in sehr wenigen Prozessschritten industriell hergestellt werden. Darüber hinaus können die Reiblamellen 10; 20; 30 nahezu ohne Verlust von dem als Reibmaterial verwendeten Pulverlack hergestellt werden. Schließlich können durch die Bildung der Reibschichten 11; 21; 22; 31 aus Pulverlack die Taktzeiten bei der Herstellung gering gehalten werden.

Der Pulverlack, der zur Herstellung der Reibschichten 11; 21, 22; 31 verwendet wird, umfasst vorzugsweise Bindemittel, Vernetzer, Additive und Füllstoffe. Bindemittel bilden die eigentliche Struktur der Reibschicht 11; 21, 22; 31. Mögliche Substanzklassen für das beziehungsweise die Bindemittel sind: Epoxidharze, Polyesterharze (gesättigt und ungesättigt) Acrylatharze, Polyurethane, Polyamide, Polyethylen, Polyvinylchlorid.

Vernetzer führen zur Vernetzungsreaktion der Bindemittel und sind so für den Aufbau eines polymeren Netzwerkes in der Reibschicht 11; 21, 22; 31 verantwortlich. Als Vernetzer werden zum Beispiel die folgenden Substanzen verwendet: Phenolische Härter, Imidazolin-Derivate, Imidazole, Anhydridaddukte, Polycarbonsäureanhydride, Carbonsäureanhydride, Dicyandiamid-Derivate, Epoxidharz, Triglycidisocyanurat (TGIC), Hydroxyalkylamidhärter, aromatische Glycidylester, Isocyanataddukte, Uretdione, Dodecandicarbonsäure, Dicarbonsäuren, Isocyanataddukte, Diisocyandiamid, BF₃-Komplexe, saure Polyester, saure Acrylate, Polyphenole, Oxazoline, modifizierte Melamin- und Harnstoffharze.

Additive beeinflussen Eigenschaften des Lacks in der flüssigen und ausgehärteten Form. Mögliche Substanzklassen sind: Verlaufsmittel (zum Beispiel Acrylate), Entgasungsadditive (zum Beispiel Benzoin), Strukturmittel.

Füllstoffe dienen der Herstellung einer wirtschaftlichen Mischung und der Einstellung der tribologischen Eigenschaften. Mögliche Füllstoffe entstammen den folgenden Klassen: Metalloxide und Metallsalze (zum Beispiel Caliumcarbonate, Bariumsulfat, Talkum...), Ruße, Glas.

Die Reiblamellen 10, 20; 30 mit den Reibschichten 11; 21, 22; 31 aus Pulverlack sind besonders vorteilhaft zur Übertragung von Kräften geeignet, wie sie in Kupplungen und Bremsen im Automobilbereich üblich sind. Die Reiblamellen 10; 20; 30 können vorteilhaft in hybridisierten, automatisierten Doppelkupplungsgetrieben, Hybridkupplungen, trockenen oder feuchten Lamellenkupplungen, insbesondere in Allraddifferentialen, Überlastkupplungen, insbesondere in Zweimassenschwungrädern, und/oder Haltebremsen eingesetzt werden.

In Figur 4 ist mit Hilfe von Rechtecken 41 bis 46 ein Ablaufplan für ein Verfahren zur Herstellung von Pulverlackschichten zur Verwendung als Reibschicht (11; 21, 22; 31 in den Figuren 1 bis 3) dargestellt. Das Rechteck 41 betrifft eine optionale Vorbehandlung der Trägerelemente (3; 33 in den Figuren 1 bis 3), die als Trägerbleche ausgeführt sind und verkürzt auch als Bleche bezeichnet werden. Beim Vorbehandeln werden die Bleche zum Beispiel gereinigt.

Im Verfahrensschritt 42 werden die Bleche vorgeheizt. Beim Vorheizen wird das Trägerelement oder Blech, auf dem der Pulverlack dann später abgeschieden wird, in einem Durchlaufofen auf einhundertfünfzig bis zweihundertfünfzig Grad Celsius erwärmt, bevor es in eine Beschichtungskabine einfährt. Beim Vorheizen wird das Blech vorteilhaft soweit erhitzt, dass das Lackpulver später beim Abscheiden der Lackpartikel zu einer dicken Schicht geliert.

Der Verfahrensschritt 43 betrifft die Herstellung des Pulverlacks. Der Pulverlack besteht, wie vorab beschrieben ist, aus den Bestandteilen Bindemittel, Vernetzer, Additiven und Füllstoffen. Darüber hinaus wird durch die Beimischung von Stellmitteln in den Pulverlack dessen Fließfähigkeit stark vermindert. Dadurch kommt es weder beim Aufbau der Schicht noch beim Härten zu einem Abrutschen der Schicht in Form von Nasen oder Tropfen. Als Stellmittel können alle feinen, bei den Betriebstemperaturen beziehungsweise Herstelltemperaturen nicht schmelzbaren Verbindungen verwendet werden.

Der Verfahrensschritt 44 betrifft das Aufbringen der Pulverlackschicht auf das Trägerelement oder Blech. Beim eigentlichen Lackiervorgang fährt das zu beschichtende Blech oder Trägerelement durch eine Wolke aus Lackpartikeln in einer Beschichtungskabine.

In der Beschichtungskabine werden die entsprechend geladenen Pulverpartikel homogen auf mindestens eine Oberfläche des Blechs oder Trägerelements abgeschieden. Dabei erzeugen die geladenen Pulverlackpartikel in dem geerdeten Trägerelement oder Trägerblech Spiegelladungen und haften elektrostatisch an der Metalloberfläche.

Dadurch, dass das Blech oder Trägerelement durch eine homogene Wolke aus Pulverlackpartikeln fährt, können vorteilhaft auch Bauformen realisiert werden, die mit konventionellen Methoden der Reibbelagherstellungen, wie zum Beispiel Heißpressen, nicht möglich sind. Mit dem beschriebenen Verfahren zur Herstellung der Reibschichten aus Pulverlack können vorteilhaft auch konische oder anderweitig dreidimensional geformte Trägerelemente beschichtet werden, wie sie zum Beispiel in Figur 3 dargestellt sind.

Die in den Lackpartikeln enthaltenen Harze werden auf Temperaturen oberhalb der ersten Glasübergangstemperatur erhitzt. Dadurch werden sie gelartig und kleben aneinander und am Untergrund. Außerdem steigt die Leitfähigkeit des aufgetragenen Materials, und die Ladung der aus dem aufgetragenen Material gebildeten Schicht kann über das geerdete Trägerblech abfließen.

Der Verfahrensschritt 45 betrifft das Härten oder Aushärten der beim Beschichten aufgebrachten Pulverlackschicht. Das Härten oder Aushärten dauert zum Beispiel fünf bis zwanzig Minuten. Die beiden Prozessschritte 44 und 45 können verkettet in einem kontinuierlichen Prozess gefahren werden. Die Taktzeit beträgt zum Beispiel eins bis zehn Sekunden. Pulverlack, der nicht auf dem Trägerelement haften bleibt, kann angesaugt und erneut verwendet werden. Dadurch können vorteilhaft Lackausbeuten von über neunundneunzig Prozent erreicht werden.

Der Prozessschritt oder Verfahrensschritt 46 betrifft eine optionale Nachbehandlung des Trägerelements mit der Reibschicht. Bei der Nachbehandlung wird die Reibschicht zum Beispiel leicht angeschliffen, um eine besonders funktionstüchtige Reiboberfläche darzustellen. Beim Anschleifen wird die Reibschichtdicke vorzugsweise um weniger als 0,2 Millimeter reduziert.

Bei dem erfindungsgemäßen Verfahren wird im Verfahrensschritt 43 in Figur 4 dem Pulverlack, der zur Herstellung der Reibschicht 11; 21,2; 31 verwendet wird, Schleifstaub aus einer herkömmlichen oder konventionellen Reibbelagfertigung beigemischt. Eine konventionelle Belagfertigung ist zum Beispiel in den deutschen Offenlegungsschriften DE 10 2008 005 911 A1 und DE 10 2008 028 558 A1 beschrieben.

Der Schleifstaub aus der herkömmlichen Belagfertigung ist bereits fertig ausgehärtet und somit chemisch inaktiv. Die Qualität des Schleifstaubs kann schwanken. Insbesondere kann unterschiedlich viel Verschleißmaterial der Schleifscheibe, die zum Schleifen von herkömmlichen Kupplungsreibbelägen verwendet wird, enthalten sein. Dieses Verschleißmaterial ist gegebenenfalls stark abrasiv.

Aufgrund seiner feinpulvrigen Struktur und seiner gleichzeitig abrasiven Eigenschaften kann der Schleifstaub aus der herkömmlichen Reibbelagfertigung nur kostenintensiv entsorgt werden.

Bei im Rahmen der vorliegenden Erfindung durchgeführten Versuchen und Untersuchungen wurde festgestellt, dass sich der Schleifstaub aus der konventionellen Reibbelagfertigung aus folgenden Gründen sehr gut für die Herstellung von Reibschichten, insbesondere Reiblamellen, aus Pulverlack eignet. Zum einen muss der Bindemittelanteil in Pulverlacken im Vergleich zu herkömmlichen Belägen sehr hoch sein, damit die Pulverlackpartikel elektrisch aufgeladen werden können. Die elektrische Aufladung wiederum ist nötig, um ein elektrostatisches Anhaften der Pulverlackpartikel am Trägerelement sicherzustellen. Daher eignen sich Pulverlackmischungen gut, um feine Zuschlagstoffe, wie den Schleifstaub aus der herkömmlichen Reibbelagherstellung einzubinden.

Zum anderen werden die vorzugsweise trocken oder feucht laufenden Reiblamellen mit Pulverlack als Reibschicht vorteilhaft dann eingesetzt, wenn eine Verschleißreserve aufgrund einer speziellen Anwendung so gering ist, dass herkömmliche Reibbeläge zu dick sind. In diesem Fall kommt es zu vergleichsweise wenig Abrieb und hauptsächlich zu einer statischen Beanspruchung der Reibschicht. Das Vorhandensein von Abrasivstoffen, wie sie beispielsweise in dem Schleifstaub aus dem Schleifscheibenabrieb enthalten sein können, ist in dieser speziellen Anwendung deutlich weniger kritisch zu bewerten.

Die Verwendung des Schleifstaubs stellt somit einen neuen wertschöpfenden Schritt in der Reibbelagherstellung dar und schont darüber hinaus die Umwelt durch das Wegfallen einer aufwendigen Entsorgung beziehungsweise einer die Umwelt belastenden Schleifstaubverbrennung. Darüber hinaus sinkt der Anteil eines unerwünschten Rohstoffverlustes durch ein sehr geringes Schleifaufmaß auf den aus dem Pulverlack mit dem Schleifstaub gefertigten Reiblamellen.

Im tribologischen Kontakt verhält sich der Reibstaub oder Schleifstaub ähnlich wie in konventionellen Kupplungsbelägen und führt dazu, dass die tribologischen Eigenschaften von Reiblamellen auf Pulverlackbasis denen von konventionellen Kupplungsbelägen angeglichen werden. Darüber hinaus ist der Pulverlack mit dem Schleifstaub oder Reibstaub aus der herkömmlichen Reibbelagfertigung, insbesondere in größeren Schichtdicken, deutlich zäher als vergleichbare Pulverlacke ohne Schleifstaub.

### Bezugszeichenliste

- 3: Trägerelement
- 4: Kreisringscheibe
- 5: Mitnehmerbereich
- 6: Innenverzahnung
- 10: Reiblamelle
- 11: Reibschicht
- 20: Reiblamelle
- 21: Reibschicht
- 22: Reibschicht
- 30: Reiblamelle
- 31: Reibschicht
- 33: Trägerelement
- 34: Hohlzylinder
- 35: Mitnehmerbereich
- 36: Innenverzahnung
- 41: Rechteck
- 42: Rechteck
- 43: Rechteck
- 44: Rechteck
- 45: Rechteck
- 46: Rechteck

## Patentansprüche

1. Verfahren zum Herstellen einer Reibschicht (11;21,22;31), insbesondere für einen trocken oder feucht laufenden Kupplungsreibbelag, auf einem Trägerelement (3;33), **dadurch gekennzeichnet, dass** die Reibschicht (11;21,22;31) aus einem Pulverlack gebildet wird, dem Schleifstaub beigemischt ist, der aus einer herkömmlichen Reibbelagfertigung stammt.

2. Verfahren nach Anspruch 1, **dadurch gekennzeichnet, dass** einer Pulverlackbasismischung Schleifstaub aus der herkömmlichen Reibbelagfertigung beigemischt wird.

3. Verfahren nach Anspruch 2, **dadurch gekennzeichnet, dass** der Schleifstaub aus der herkömmlichen Reibbelagfertigung als Füllstoff in der Pulverlackmischung verwendet wird.

4. Verfahren nach einem der vorhergehenden Ansprüche, **dadurch gekennzeichnet, dass** die Pulverlackmischung zur Herstellung der Reibschicht (11;21,22;31) mindestens ein Bindemittel, mindestens einen Vernetzer und als Füllstoff Schleifstaub aus der herkömmlichen Reibbelagfertigung enthält.

5. Verfahren nach einem der vorhergehenden Ansprüche, **dadurch gekennzeichnet, dass** Schleifstaub, der beim Schleifen von herkömmlichen Reibbelägen anfällt, gesammelt und dem Pulverlack beigemischt wird (Verfahrensschritt 43 in Figur 4).

6. Verfahren nach einem der vorhergehenden Ansprüche, **dadurch gekennzeichnet, dass** der Pulverlack mit dem Schleifstaub aus der herkömmlichen Reibbelagfertigung in Form einer sprühfertigen Pulverlackmischung auf das Trägerelement (3;33) abgeschieden wird.

7. Verfahren nach einem der vorhergehenden Ansprüche, **dadurch gekennzeichnet, dass** das Abscheiden des Pulverlacks mit dem Schleifstaub aus der herkömmlichen Reibbelagfertigung auf das vorzugsweise erhitzte Trägerelement (3;33) fortgesetzt wird, bis eine gewünschte Reibschichtdicke erreicht ist.

8. Verfahren nach einem der vorhergehenden Ansprüche, **dadurch gekennzeichnet, dass** die ausgehärtete Reibschicht (11;21,22;31) mit dem Schleifstaub aus der herkömmlichen Reibbelagfertigung eine Dicke von 0,2 bis 1,5 Millimeter, insbesondere von 0,5 bis 1,0 Millimeter, aufweist.

9. Trägerelement (3;33) mit einer Reibschicht (11;21,22;31), die insbesondere gemäß einem Verfahren nach einem der vorhergehenden Ansprüche, aus einem Pulverlack gebildet ist, dem Schleifstaub beigemischt ist, der aus einer herkömmlichen Reibbelagfertigung stammt.

10. Trocken oder feucht laufende Reiblamelle einer Lamellenkupplung mit mindestens einem Trägerelement (3;33) nach Anspruch 9.
